# EUROPEAN PATENT SPECIFICATION

(11) **EP 3 237 524 B1**
(45) Date of publication and mention of the grant of the patent: **22.07.2020**
(21) Application number: 15873382.4
(22) Date of filing: 25.12.2015
(51) Int. Cl.: B60C 1/00, C08L 9/06, C08L 9/00, C08K 7/02, C08L 57/02, C08L 93/00

(54) **A TIRE HAVING A TREAD COMPRISING RUBBER COMPOSITION COMPRISING SHORT FIBERS**
LUFTREIFEN MIT EINER LAUFFLÄCHE MIT KAUTSCHUKZUSAMMENSETZUNG MIT KURZFASERN
PNEUMATIQUE AYANT UNE BANDE DE ROULEMENT COMPRENANT UNE COMPOSITION DE CAOUTCHOUC COMPRENANT DES FIBRES COURTES

(30) Priority: 26.12.2014 WO PCT/JP2014/084763
(43) Date of publication of application: 01.11.2017
(73) Proprietor: Compagnie Générale des Etablissements Michelin, 63000 Clermont-Ferrand (FR); Michelin Recherche et Technique S.A., 1763 Granges-Paccot (CH)
(72) Inventor: SAKURADA, Tomoya, Tokyo 163-1073 (JP); DOTSON, Michael Edward, Tokyo 163-1073 (JP)
(74) Representative: Regimbeau
(86) International application number: PCT/JP2015/086591
(87) International publication number: WO 2016/104815

(56) References cited:
- EP-A1- 1 048 691
- EP-A1- 2 366 559
- WO-A1-2005/092971
- JP-A- S5 741 201
- JP-A- 2001 146 532
- JP-A- 2013 249 421
- JP-A- 2013 522 427
- US-A1- 2006 060 284
- DATABASE WPI Week 200124 Thomson Scientific, London, GB; AN 2001-229311 XP002782671, & JP 2001 011240 A (BRIDGESTONE CORP) 16 January 2001 (2001-01-16)
- DATABASE WPI Week 199513 Thomson Scientific, London, GB; AN 1995-093953 XP002782672, & JP H07 18121 A (BRIDGESTONE CORP) 20 January 1995 (1995-01-20)
- DATABASE WPI Week 201409 Thomson Scientific, London, GB; AN 2013-M59497 XP002782673, & KR 2013 0075456 A (HANKOOK TIRE MFG CO LTD) 5 July 2013 (2013-07-05)
- DATABASE WPI Week 200249 Thomson Scientific, London, GB; AN 2002-457982 XP002782674, & JP 2002 097311 A (BRIDGESTONE CORP) 2 April 2002 (2002-04-02)

## Description

### 1. FIELD OF THE INVENTION

The invention relates to the tires having treads suitable for snow tires or winter tires, capable of rolling over ground surfaces covered with snow.

### 2. BACKGROUND

As is known, the snow tires classified in a category of use "snow", identified by an inscription the Alpine symbol ("3-peak-mountain with snowflake), marked on their sidewalls, mean tires whose tread patterns, tread compounds or structures are primarily designed to achieve, in snow conditions, a performance better than that of normal tires intended for normal on-road use with regard to their abilities to initiate, maintain or stop vehicle motion.

Snowy ground, referred to as white ground, has the feature of having a low friction coefficient and a constant objective of tire manufactures is improvement of a grip performance of snow tires or winter tires on snow.

JP2001011240 discloses rubber compositions for tire treads, comprising 100 phr of diene elastomer(s), 50 or 60 phr of reinforcing filler (25 or 10 phr of carbon black, 25 or 50 phr of silica), 10 or 12 phr of softening agent, 6 or 10 phr of polyvinyl alcohol short fibers having average length of 2 mm (see e.g. Examples 7 or 8).

JPH0718121 discloses a rubber composition for a car tire comprising 100 phr of natural rubber, 30 phr of carbon black and 2.5 phr of short fibers. The short fibers are thermoplastic polyamide fibers. The rubber composition further comprises process oil as plasticizer (see e.g. paragraph 26).

KR20130075456 discloses a rubber composition for a tire comprising 125.5 phr of SBR, 5.7 phr of carbon black, 38 phr of aramid short fibers. According to the description the rubber composition further comprises oil as plasticizer (paragraph 64).

JP2002097311 discloses rubber compositions for a tire treads, comprising 100 phr of diene elastomer(s), 90, 100 or 110 phr of reinforcing filler (carbon black, silica and aluminum hydroxide), 42.5 phr of softener (also oil) and 2, 3 or 4 phr of polyethylene short fiber having average length of 2 mm (see e.g. Examples 1,2 ,6, 7 and 8).

EP2366559 discloses a rubber composition for a pneumatic tire comprising 60 phr of natural rubber, 30 phr of polybutadiene, 3 phr of short fibrillated armaid fiber pulp, 30 phr of carbon black and 5 phr of rubber processing oil (see Table 2, experimental E).

US2006060284 comprises a rubber composition for a pneumatic tire comprising 60 phr of polybutadiene, 40 phr of natural rubber, 12 phr of aramid short fibers, 30 phr of carbon black and 6 phr of rubber processing oil (Table 1, sample B).

EP1048691 discloses a rubber composition for a tire under tread, comprising 100 phr of diene elastomer(s), 35 phr of reinforcing filler (carbon black and aluminum hydroxide), 16.25 phr of softener (also oil) and 2 phr of polyethylene (see e.g. Example 15).

### 3. BRIEF DESCRIPTION OF THE INVENTION

On the continuing their research, the inventors have discovered a novel and specific rubber composition for a tire tread, which makes it possible to achieve the above objective to improve a grip of a tire on snow.

The present invention concerns the subject-matter of the claims.

A first subjective matter herein described is a tire having a tread comprising a rubber composition comprising at least, a diene elastomer, 0 to less than 45 phr of a reinforcing filler, between 30 and 180 phr of a plasticizer chosen from the group consisting of liquid plasticizers, hydrocarbon resins and the mixtures thereof, and between 2 and 50 phr of short fibers.

Moreover, aspects of the tire herein described can be as follows.
[1]. A tire having a tread comprising a rubber composition comprising at least:
   - a diene elastomer;
   - 0 to less than 45 phr of a reinforcing filler;
   - between 30 and 180 phr of a plasticizer chosen from the group consisting of liquid plasticizers, hydrocarbon resins and the mixtures thereof; and between 2 and 50 phr of short fibers.
[2] The tire according to [1], wherein the diene elastomer is chosen from the group consisting of natural rubber, synthetic polyisoprenes, polybutadienes, butadiene copolymers, isoprene copolymers and the mixtures thereof.
[3] The tire according to [1] or [2], wherein the rubber composition comprises 20 to 100 phr of a copolymer based on styrene and butadiene, and optionally, 0 to 80 phr of another diene elastomer.
[4] The tire according to [3], wherein the copolymer based on styrene and butadiene is chosen from the group consisting of styrene-butadiene copolymers, styrene-butadiene-isoprene copolymers and the mixtures thereof.
[5] The tire according to [4], wherein the copolymer based on styrene and butadiene is a styrene-butadiene copolymer (SBR).
[6] The tire according to any one of [1] to [5], wherein the content of the plasticizer is between 40 and 160 phr.
[7] The tire according to any one of [1] to [6], wherein the liquid plasticizers are chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, sulphonate plasticizers and the mixtures thereof.
[8] The tire according to [7], wherein the liquid plasticizers are chosen from the group consisting of MES oils, TDAE oils, naphthenic oils, vegetable oils and mixtures thereof.
[9] The tire according to any one of [1] to [8], wherein the hydrocarbon resins exhibit a Tg greater than 20°C.
[10] The tire according to any one of [1] to [9], wherein the hydrocarbon resins are chosen from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins, and the mixtures of these resins.
[11] The tire according to any one of [1] to [10], wherein the content of reinforcing filler is between 0 and 30 phr.
[12] The tire according to any one of [1] to [11], wherein the reinforcing filler comprises carbon black and/or reinforcing inorganic filler(s).
[13] The tire according to any one of [1] to [12], wherein the fibers are chosen from the group consisting of polyvinyl alcohol (PVA) fibers, polyethylene oxide (PEO) fibers, cellulose fibers, polysaccharide fibers and mixture thereof.
[14] The tire according to [13], wherein the fibers are polyvinyl alcohol (PVA) fibers.
[15] The tire according to any one of [1] to [14], wherein the average length of short fibers by number is between 1 and 30 mm.
[16] The tire according to any one of [1] to [15], wherein the content of short fibers is between 4 and 40 phr.
[17] The tire according to any one of [1] to [16], wherein the majority in number of the short fibers are oriented by an angle substantially of +45° or -45° with the radial direction and the circumferential one of the tire.

The tires of the invention are particularly intended to equip passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers)

The invention and its advantages will be easily understood in the light of the description and implementation examples which follow.

### 4. DETAILED DESCRIPTION OF THE INVENTION

In the present description, unless expressly indicated otherwise, all the percentages (%) shown are % by weight. The abbreviation "phr" stands for parts by weight per hundred parts of elastomer (of the total of the elastomers if several elastomers are present). All the values of the glass transition temperature "Tg" are measured in a known manner by DSC (Differential Scanning calorimetry) according to the standard ASTM D3418 (1999).

Moreover, any range of values denoted by the expression "between a and b" represents the field of values ranging from more than a to less than b (that is to say limits a and b excluded) whereas any range of values denoted by the expression "from a to b" means the field of values ranging from a up to b (that is to say including the strict limits a and b).

The rubber composition of the tread of the tire herein described is based on at least a diene elastomer, 0 to less than 45 phr of a reinforcing filler, between 30 and 180 phr of a plasticizer chosen from the group consisting of liquid plasticizers, hydrocarbon resins and the mixtures thereof, and between 2 and 50 phr of short fibers.

The expression "based on" should be understood in the present application to mean a composition comprising the mixture and/or the product of the reaction of the various constituents used, some of the constituents being able or intended to react together, at least partly, during the various manufacturing phases of the composition, in particular during the vulcanization (curing).

In the present application, the following definitions of directions are understood:

A axial direction is a direction parallel to the axis of rotation of a tire.

A radial direction is a direction perpendicular to the axis of rotation of the tire, and the radial direction is a direction of the thickness of a tread of the tire.

A circumferential direction is a direction tangent to any circle centered on the axis of rotation of the tire, and the circumferential direction is perpendicular to both the radial direction and the axial direction.

### 4-1. Diene elastomer

The rubber composition of the tread of the tire according to the present invention has a first essential feature of comprising a diene elastomer.

It should be remembered that "diene" elastomer or rubber should be understood as meaning an elastomer resulting at least in part (i.e., a homopolymer or a copolymer) from diene monomers (monomers carrying two carbon-carbon double bonds which may or may not be conjugated).

Diene elastomers can be classified in a known way into two categories: those "essentially unsaturated" and those "essentially saturated". Butyl rubbers, such as, for example copolymers of dienes and of α-olefins of EPDM type, come within the category of essentially saturated diene elastomers, having a content of units of diene origin which is low or very low, always less than 15% (mol%). In contrast, essentially unsaturated diene elastomer is understood to mean a diene elastomer resulting at least in part from conjugated diene monomers, having a content of units of diene origin (conjugated dienes) which is greater than 15% (mol%). In the category of "essentially unsaturated" diene elastomers, "highly unsaturated" diene elastomer is understood to mean in particular a diene elastomer having a content of units of diene origin (conjugated dienes) which is greater than 50%.

It is preferable to use at least one diene elastomer of the highly unsaturated type, in particular a diene elastomer chosen from the group consisting of polybutadienes (BR), synthetic polyisoprenes (IR), natural rubber (NR), butadiene copolymers, isoprene copolymers and mixtures of these elastomers. Such copolymers are more preferably chosen from the group consisting of butadiene/styrene copolymers (SBR), in particular a solution SBR ("SSBR") and/or bearing at least one (i.e., one or more) SiOR function, R being hydrogen or hydrocarbon radical, as described in an application WO 2012/069565, isoprene/butadiene copolymers (BIR), isoprene/styrene copolymers (SIR), isoprene/butadiene/styrene copolymers (SBIR) and mixtures of such copolymers.

More preferably, the rubber composition composing the tread of the tire of the present invention comprises, as the diene elastomer, from 20 to 100 phr of a copolymer based on styrene and on butadiene, that is to say a copolymer of at least one styrene monomer and of at least one butadiene monomer; in other words, said copolymer based on styrene and on butadiene comprises, by definition, at least units derived from styrene and units derived from butadiene.

Still more preferably, the content of said copolymer in the rubber composition is within a range from 40 to 100 phr, particularly within a range from 50 to 100 phr.

Suitable butadiene monomers are in particular 1,3-butadiene, 2-methyl-1,3-butadiene, 2,3-di(C₁-C₅ alkyl)-1,3-butadienes such as for example 2,3-dimethyl-1,3-butadiene, 2,3-diethyl-1,3-butadiene, 2-methyl-3-ethyl-1,3-butadiene or 2-methyl-3-isopropyl-1,3-butadiene and an aryl-1,3-butadiene. Suitable styrene monomers are in particular styrene, methylstyrenes, para-(tert-butyl)styrene, methoxystyrenes and chlorostyrenes.

Said copolymer based on styrene and on butadiene may have any microstructure, which is a function of the polymerization conditions used, in particular of the presence or absence of a modifying and/or randomizing agent and of the amounts of modifying and/or randomizing agents used. It may be, for example, a block, statistical, sequential or microsequential copolymer, and may be prepared in dispersion or in solution; it may be coupled and/or star-branched or else functionalized with a coupling and/or star-branching or functionalizing agent.

Preferably, the copolymer based on styrene and on butadiene is chosen from the group consisting of styrene-butadiene (abbreviated to SBR) copolymers, styrene-butadiene-isoprene (abbreviated to SBIR) copolymers and the mixtures thereof.

More preferably, an SBR copolymer is used. Among the SBR copolymers, mention may especially be made of those having a styrene content of between 5% and 60% by weight and more particularly of between 20% and 50%, a content (mol%) of 1,2-bonds of the butadiene part of between 4% and 75% and a content (mol%) of trans-1,4- bonds of between 10% and 80%.

The Tg (glass transition temperature) of copolymer based on styrene and on butadiene is preferably from -80°C to 0°C, more preferably from -80°C to -35°C, still more preferably from -70°C to -40°C.

With the preferable copolymer based on styrene and on butadiene described above, at least another optional (or second) diene elastomer, optional and different from said copolymer (i.e. not comprising units derived from styrene and butadiene) may be combined, said second diene elastomer being present in a weight content which is consequently from 0 to 80 phr in case of that content of copolymer based on styrene and on butadiene is from 20 to 100 phr. That means content of the other diene elastomer(s) is 100 phr minus that of copolymer based on styrene and on butadiene.

The content of this optional second diene elastomer is preferably 0 to 80 phr, more preferably 0 to 60 phr, still more preferably 0 to 40 phr.

This optional second diene elastomer is preferably chosen from the group consisting of natural rubbers (NR), synthetic polyisoprenes (IR), polybutadienes (BR), isoprene copolymers and blends of these elastomers. Such copolymers are more preferably chosen from the group consisting of isoprene-butadiene copolymers (BIR) and isoprene-styrene copolymers (SIR).

Especially suitable, among the latter, are polybutadiene (BR) homopolymers and in particular those having a content (mol%) of 1,2- units of between 4% and 80% or those having a content (mol%) of cis-1,4- units of greater than 80%; polyisoprene (IR) homopolymers; butadiene-isoprene copolymers (BIR) and especially those having an isoprene content of between 5% and 90% by weight and a Tg from -40°C to -80°C; and isoprene-styrene copolymers (SIR) and especially those having a styrene content of between 5% and 50% by weight and a Tg of between -25°C and - 50°C.

According to one preferred embodiment, the second diene elastomer is an isoprene elastomer, more preferably natural rubber or a synthetic polyisoprene of cis-1,4-type; among these synthetic polyisoprenes, use is preferably made of polyisoprenes having a content (mol%) of cis-1,4- bonds of greater than 90%, more preferably still of greater than 98%.

According to a more preferred embodiment, the second diene elastomer is a polybutadiene, preferably a polybutadiene having a content (mol%) of cis-1,4 bonds of greater than 90%.

According to another more preferred embodiment, the second diene elastomer is a mixture of polybutadiene with the following isoprene elastomer (natural rubber or synthetic polyisoprene).

### 4-2. Reinforcing Filler

Use may be made of any type of reinforcing filler known for its capabilities of reinforcing a rubber composition which can be used for the manufacture of tires, for example an organic filler, such as carbon black, or a reinforcing inorganic filler, such as silica, with which a coupling agent is combined in a known way.

Such a reinforcing filler typically consists of nano particles, the mean size (by weight) of which is less than 500 nm, generally between 20 and 200 nm, in particular and preferably between 20 and 150 nm.

All carbon blacks, in particular blacks of the HAF, ISAF or SAF type, conventionally used in treads for tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks. The carbon blacks might, for example, be already incorporated in the isoprene elastomer in the form of a masterbatch (see, for example, Applications WO 97/36724 or WO 99/ 16600).

Mention may be made, as examples of organic fillers other than carbon blacks, of the functionalized polyvinyl organic fillers as described in Applications WO 2006/ 069792, WO 2006/069793, WO2008/003434 and WO2008/003435.

The term "reinforcing inorganic filler" should be understood here as meaning any inorganic or mineral filler, whatever its colour and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica (SiO₂), or of the aluminous type, in particular alumina (Al₂O₃), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 m²/g, preferably from 30 to 400 m²/g, in particular between 60 and 300 m²/g. Mention will be made, as highly dispersible ("HD precipitated silicas"), for example, of the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber. Mention may be made, as examples of reinforcing aluminas, of the "Baikalox A125" or "Baikalox CR125" aluminas from Bai'kowski, the "APA-100RDX" alumina from Condea, the "Aluminoxid C" alumina from Degussa or the "AKP-G015" alumina from Sumitomo Chemicals.

The rubber composition of the tread of the tire herein described comprises 0 to less than 45 phr (that is, is devoid or comprising less than 45phr) of a reinforcing filler.

In the present invention, the content of total reinforcing filler (carbon black and/or reinforcing inorganic filler) is between 0 and 30 phr, more preferably between 0.5 and 20 phr, still more preferably between 1 and 10 phr.

In order to couple the reinforcing inorganic filler to the diene elastomer, use is made, in a well-known way, of an at least bifunctional coupling agent (or bonding agent) intended to provide a satisfactory connection, of chemical and/or physical nature, between the inorganic filler (surface of its particles) and the diene elastomer. Use is made, in particular, of bifunctional organosilanes or polyorganosiloxanes.

Use is made in particular of silane polysulphides, referred to as "symmetrical" or "asymmetrical" depending on their specific structure, as described, for example, in Applications WO 03/002648 (or US 2005/016651) and WO 03/002649 (or US 2005/016650). "Symmetrical" silane polysulphides corresponding to the following general formula (I):

(I) Z - A - Sx - A - Z

, in which:
x is an integer from 2 to 8 (preferably from 2 to 5);
A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
Z corresponds to one of the formulae below: 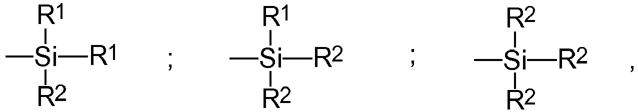 in which:
   the R¹ radicals, which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
   the R² radicals, which are unsubstituted or substituted and identical to or different from one another, represent a C₁-C₁₈ alkoxyl or C₅-C₁₈ cycloalkoxyl group (preferably a group chosen from C₁-C₈ alkoxyls and C₅-C₈ cycloalkoxyls, more preferably still a group chosen from C₁-C₄ alkoxyls, in particular methoxyl and ethoxyl), are suitable in particular, without the above definition being limiting. Mention will more particularly be made, as examples of silane polysulphides, of bis((C₁-C₄)alkoxyl(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula [(C₂H₅O)₃Si(CH₂)₃S₂]₂, or bis(triethoxysilylpropyl)disulphide, abbreviated to TESPD, of formula [(C₂HSO)₃Si(CH₂)₃S]₂. Mention will also be made, as preferred examples, of bis(mono(C₁-C₄)alkoxyldi(C₁-C₄)alkylsilylpropyl) polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

In the rubber compositions in accordance with the present invention, the content of coupling agent is preferably 0 to less than 3.6 phr, more preferably 0 to less than 2.4 phr.

A person skilled in the art will understand that a reinforcing filler of another nature, in particular organic nature, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer.

### 4-3. Plasticizer

The rubber composition of the tread of the tire according to the present invention has another essential feature of comprising between 30 and 180 phr of a plasticizer chosen from the group consisting of liquid plasticizers, (solid) hydrocarbon resins and the mixtures thereof.

Liquid plasticizers are liquid at 20°C (under atmospheric pressure) by definition, their role is to soften the matrix by diluting the elastomer and the reinforcing filler; their Tg is by definition less than -20°C, preferably less than -40°C.

Any extending oil, whether of aromatic or non-aromatic nature, any liquid plasticizing agent known for its plasticizing properties with regard to diene elastomers, can be used. At ambient temperature (20°C) under atmospheric pressure, these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

Liquid plasticizers chosen from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE oils (Residual Aromatic Extracts), TRAE oils (Treated Residual Aromatic Extracts), SRAE oils (Safety Residual Aromatic Extracts), mineral oils, vegetable oils, ether plasticizers, ester plasticizers (for instance phosphate plasticizers), sulphonate plasticizers and the mixtures thereof are particularly suitable.

According to a preferred embodiment, the liquid plasticizer is chosen from the group consisting of MES oils, TDAE oils, naphthenic oils, vegetable oils and the mixtures thereof.

Mention may be made, as phosphate plasticizers for example, of those that contain between 12 and 30 carbon atoms, for example trioctyl phosphate. As examples of ester plasticizers, mention may especially be made of the compounds chosen from the group consisting of trimellitates, pyromellitates, phthalates, 1,2-cyclohexane dicarboxylates, adipates, azelates, sebacates, triesters of glycerol, and mixtures thereof. Among the above triesters, mention may be made of glycerol triesters, preferably composed predominantly (for more than 50% by weight, more preferably for more than 80% by weight) of an unsaturated C₁₈ fatty acid, that is to say an unsaturated fatty acid chosen from the group consisting of oleic acid, linoleic acid, linolenic acid and the mixtures thereof. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known; for example they have been described in Application WO 02/088238, as plasticizing agents in treads for tires.

Hydrocarbon resins, which are solid plasticizers (at 20°C), exhibit a Tg of greater than +20°C, preferably greater than +30°C, such as is described, for example in Applications WO 2005/087859, WO 2006/061064 and WO 2007/017060.

Hydrocarbon resins are polymers well known to a person skilled in the art which are essentially based on carbon and hydrogen and thus miscible by nature in diene elastomer composition(s), when they are additionally described as being "plasticizing". They have been described, for example, in the work entitled "Hydrocarbon Resins" by R. Mildenberg, M. Zander and G. Collin (New York, VCH, 1997, ISBN 3-527-28617-9), chapter 5 of which is devoted to their applications, in particular in the tire rubber field (5.5. "Rubber Tires and Mechanical Goods"). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say that they comprise only carbon and hydrogen atoms.

Preferably, the plasticizing hydrocarbon resin exhibits at least one, more preferably all, of the following characteristics:
- a Tg of greater than 20°C (more preferably between 40 and 100°C;
- a number-average molecular weight (Mn) of between 400 and 2000 g/mol (more preferably between 500 and 1500g/mol);
- a polydispersity index (PI) of less than 3, more preferably less than 2 (reminder: PI = Mw/Mn with Mw the weight-average molecular weight).

The Tg is measured in a known way by DSC (Differential Scanning Calorimetry) according to Standard ASTM D3418 (1999). The macrostructure (Mw, Mn and PI) of the hydrocarbon resin is determined by steric exclusion chromatography (SEC): solvent tetrahydrofuran; temperature 35°C; concentration 1 g/l; flow rate 1 ml/min; solution filtered through a filter with a porosity of 0.45 µm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a particularly preferred embodiment, the plasticizing hydrocarbon resin is chosen from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C5 fraction homopolymer or copolymer resins, C₉ fraction homopolymer or copolymer resins, alpha-methyl styrene homopolymer or copolymer resins and the mixtures thereof. Use is more preferably made, among the above copolymer resins, of those chosen from the group consisting of (D)CPD/ vinylaromatic copolymer resins, (D)CPD/terpene copolymer resins, (D)CPD/C₅ fraction copolymer resins, (D)CPD/C₉ fraction copolymer resins, terpene/vinylaromatic copolymer resins, terpene/phenol copolymer resins, C₅ fraction/vinyl-aromatic copolymer resins, C₉ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

The content of liquid plasticizer in the composition of the tread of the tire according to the present invention is preferably between 15 and 90 phr, more preferably between 20 and 80 phr, still more preferably between 25 and 70 phr, particularly within a range from 30 and 60 phr.

The content of hydrocarbon resin is preferably 15 and 90 phr, more preferably between 20 and 80 phr, still more preferably between 25 and 70 phr, particularly within a range from 30 to 60 phr.

The content of total plasticizing agent is preferably between 40 and 160 phr, more preferably between 50 and 140 phr, still more preferably within a range from 60 to 120 phr.

### 4-4. Short fibers

Another essential feature of the rubber composition of the tread of the tire according to the present invention is to comprise between 2 and 50 phr of short fibers, preferably between 4 and 40 phr, more preferably between 6 and 30 phr, still more preferably from 8 to 20 phr.

The short fibers composing the rubber composition of the tread of the tire herein described can be natural, semi-synthetic or synthetic organic fibers or inorganic fibers known to those skilled in the art.

Mention may be made, as examples of the natural fibers, animal or plant fibers such as silk fibers, spider silk fibers, wool fibers, cotton fibers, hemp fibers and flax fibers.

Mention may be made, as examples of the semi-synthetic fibers, rayon fibers such as modal fibers, acetate fibers, diacetate fibers, triacetate fibers and lyocell fibers.

Mention may be made, as examples of the synthetic fibers, polymer fibers such as polyvinyl alcohol (PVA) fibers, polyethylene oxide (PEO) fibers, aramid fibers (for example, the fibers made of Kevlar ® sold by Du Pont de Nemours), aliphatic polyamides fibers (for example, nylon 46 fiber and nylon 66 fiber), polyester fibers such as polyethylene terephthalate (PET) fibers or polyethylene naphthalate (PEN) fibers, polyimides fibers, mineral fibers such as carbon fibers, glass fibers, metallic fibers.

According to a preferred aspect of the instant description, the fibers are water soluble fibers. Preferably, the water soluble fibers are chosen from the group consisting of polyvinyl alcohol (PVA) fibers, polyethylene oxide (PEO) fibers, cellulose fibers (for instance, cotton fibers, wood, rayon fibers, viscose fibers), polysaccharide fibers (for instance, starch fibers, xanthan gum fibers) and mixture thereof. More preferably, the water soluble fibers are polyvinyl alcohol (PVA) fibers. Water solubility or solubility in water (it should be remembered that maximum weight of dissolved substance in water at given one temperature and one pressure) is one of basically well-known and constant physics (in particular, available in the "Handbooks of Chemistry and Physic") of the compounds which are organic or inorganic. The person skilled art in the art understands that the water soluble fibers can dissolve at least partly in water. Preferably, the solubility of the fibers in water at 0 °C under a pressure equal to 1 atm is higher than 1 g/100ml, more preferably higher than 2 g/100ml, still more preferably higher than 4 g/100ml.

Short fibers should be understood to mean non-continuous fibers of which average length by number is preferably between 1 and 30 mm, more preferably within a range from 2 to 15mm, still more preferably from 4 to 12 mm. The average length by number may be measured in accordance with JIS L 1015: 2010.

The short fibers consisting of monofilament or multifilaments have a thickness (or, fineness or size) defined as a mass in grams per 10000 meters, and the thickness is preferably between 500 and 4000 dtex, more preferably between 700 and 3000 dtex, still preferably 1000 and 2000 dtex. The thickness may be measured in accordance with JIS L 1015: 2010.

According to one embodiment of the invention, the short fibers are oriented by arbitrary angle with radial, axial and/or circumferential directions of the tire. Preferably, the majority in number of the short fibers is oriented by an angle substantially of +45° or -45° with the radial direction and the circumferential one of the tire. The short fibers arranged in the ±45°orientation can provide more better snow grip (braking/acceleration) performance. "Majority in number of the short fibers" should be understood to mean more than 50% by number of the all of the short fibers. "Substantially" equal to an angular value should be understood to mean an angle that may be different from this angular value by at most 10° in absolute value.

### 4-5. Various Additives

The rubber compositions of the treads of the tires in according to the invention also comprise all or a portion of the usual additives generally used in the elastomer compositions intended for the manufacture of treads for tires, in particular for snow tires or winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

These compositions can also comprise coupling activators when a coupling agent is used, agents for covering the inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

### 4-6. Manufacture of the Rubber Compositions and of the Treads

The rubber compositions of the treads of the tires according to the invention are manufactured in appropriate mixers using two successive preparation phases according to a general procedure well known to a person skilled in the art: a first phase of thermomechanical working or kneading (referred to a as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40° C and 100° C, finishing phase during which the crosslinking or vulcanization system is incorporated.

A process which can be used for the manufacture of such compositions comprises, for example and preferably, the following steps:
incorporating in the diene elastomer(s), in a mixer, the reinforcing filler, the plasticizer, the short fibers during a first stage ("non productive" stage) everything being kneaded thermomechanically, in one or more goes, until a maximum temperature of between 110°C and 190°C is reached;
cooling the combined mixture to a temperature of less than 100°C;
subsequently incorporating, during a second stage ("productive" stage), a crosslinking system;
kneading everything up to a maximum temperature of less than 120°C;
extruding or calendering the rubber composition thus obtained, in particular in the form of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; The combined mixture is then mixed (the second (productive) phase) for a few minutes, for example between 2 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably chosen from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-benzothiazolesulphenamide ("TBBS"), N-tert-butyl-2 benzothiazolesulphenimide ("TBSI"), zinc dibenzyldithiocarbamate ("ZBEC"), Tetrabenzylthiuram disulfide ("TBZTD") and the mixtures thereof.

The composition thus obtained is subsequently calendered, for example in the form of a sheet or of a plaque, in particular for laboratory characterization, or else extruded in the form of a rubber profiled element which can be used directly as snow tire tread or winter tire tread.

Additionally, in order to prepare the form of the sheet or the plaque or the rubber comprising the short fibers oriented in one direction at the chosen angle, it is possible to use any method known per se, notably as described for example in patent applications WO 2008/027045 and WO2011/069924 filed by the applications.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The rubber compositions of the treads of the tires according to the invention can constitute all or a portion only of the tread in accordance with the invention, in the case of a tread of composite type formed from several rubber compositions of different formulations.

The invention relates to the rubber compositions and to the treads described above, both in the raw state (i.e., before curing) and in the cured state (i.e., after crosslinking or vulcanization).

The invention also applies to the cases where the rubber compositions described above form only one part of treads of composite or hybrid type, especially those consisting of two radially superposed layers of different formulations (referred to as "cap-base" construction), that are both patterned and intended to come into contact with the road when the tire is rolling, during the service life of the latter. The base part of the formulation described above could then constitute the radially outer layer of the tread intended to come into contact with the ground from the moment when a new tire starts rolling, or on the other hand its radially inner layer intended to come into contact with the ground at a later stage.

The invention is further illustrated by the following non-limiting examples.

### 5. EXAMPLES OF THE IMPLEMENTATION OF THE INVENTION

### 5-1. Preparation of the Rubber Compositions and of the Treads

In these tests, four compositions (identified as C-1, C-2, C-3 and C-4) based on diene elastomers (BR/SBR) are compared, the four compositions are combined with 90 phr of a plasticizer (liquid plasticizers: 50phr, hydrocarbon resin: 40 phr), with/without 10 phr of polyvinyl alcohol short fibers, the four compositions are reinforced with low content (5 phr) of a carbon black or high content (75 phr) of a blend of the carbon black and a silica, the high content conventionally used for snow tires or winter tires:
Composition C-1: composition with the high content of the reinforcing filler without the short fibers (a reference);
Composition C-2: composition with the low content of the reinforcing filler without the short fibers (a comparative example);
Composition C-3: composition with the high content of the reinforcing filler with the short fibers (another comparative example);
Composition C-4: composition according to the present invention with the low content of the reinforcing filler with the short fibers;
The formulations of the three compositions (Table 1 - contents of the various products expressed in phr) are given in Table 1; the vulcanization system is composed of sulphur and sulphenamide.

The reinforcing filler (compositions 1 and 3: a carbon black and a reinforcing inorganic filler, such as silica, and its associated coupling agent, compositions 2 and 4: a carbon black), the plasticizer, the short fibers (for compositions 3 and 4), the diene elastomer(s) and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasted in total approximately 3 to 4 minutes, until a maximum "dropping" temperature of 165°C was reached. The mixture thus obtained was recovered and cooled and then sulphur and an accelerator of sulphenamide type were incorporated into an external mixer (homofinisher) at 30°C, everything being mixed (productive phase) for an appropriate time (for example between 5 and 12 min).

The compositions thus obtained were subsequently calendered, either in the form of sheets (for example, thickness: 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

Subsequently, for each of the compositions 3 and 4, the majority in number of the short fibers in the compositions was oriented by an angle substantially of 45° with a thickness direction of sheets (to be finally a radial direction of a tire) and a calendered directions (to be finally an circumferential direction of the tire) with a method described in a patent application WO 2008/027045 (that is, firstly, a stack of the calendered sheets was cut at the 45° with a thickness direction of the stack, secondly, each of the cut sections were separate and then rotated 90° with the thickness direction of the stack, and finally, each of the rotated sections were bonded together at a seam).

### 5-2. Friction test with rubber block on snow

These four compositions were subjected to a laboratory test consisting in measuring their friction coefficients on snow. The principle is based on a block of a rubber composition that slides at a given speed (for example equal to 500 mm/second) over a snow track with an imposed load (for example: 2 to 3 bar). The forces generated in a direction of travel (Fx) of the block and another direction perpendicular to the travel (Fz) are measured. The Fx/Fz ratio determines the friction coefficient of the test specimen on the snow. The snow temperature was set at -10°C, and the snow test was conducted on a hard pack snow track with a CTI penetrometer reading of about 90 in according to Standard ASTM F1805.

This test, the principle of which is well known to a person skilled in the art (see, for example, patent applications EP 1 052 270 and EP 1 505 112), makes it possible to evaluate, under representative conditions, the grip on ice/snow which would be obtained after a running test on a vehicle fitted with tires whose tread is composed of the same rubber compositions.

The majority in number of the short fibers in the blocks of the compositions 3 and 4 was oriented by the angle substantially of +45° with the direction of travel of the blocks and the other direction perpendicular to the travel.

The results are expressed in Table 2. A value above that of the reference (composition C-1), arbitrarily set at 100, indicates an improved result, that is to say an aptitude for shorter braking distance. It is observed in this Table 2 that the composition C-4 according to the invention has a remarkable increase (20%, 18% or even 25%, respectively) in the friction coefficient on the snow, in comparison to the composition C-1 (reference), the composition C-2 and the composition C-3 (comparative examples).

Moreover, a snow friction coefficient of the block of the composition 4 was measured in the opposite direction to the above, in other words, the majority in number of the short fibers in the block of the composition was oriented by an angle substantially of -45° with a direction of travel of the block and another direction perpendicular to the travel. The snow friction coefficient indicates 120 based on that of the composition C-1 (reference), arbitrarily set at 100.

In conclusion, the results of the tests commented above show that the specific rubber composition of the tread of the snow tire according to the present invention gives the snow tires and their treads a better and improved grip on snowy ground.

**Table 1**

| Rubber Composition No.: | Ref. | Comparative examples | | Examples of the invention |
|---|---|---|---|---|
| | C-1 | C-2 | C-3 | C-4 |
| BR (1) | 40 | 40 | 40 | 40 |
| SBR (2) | 60 | 60 | 60 | 60 |
| Silica (3) | 70 | - | 70 | - |
| Coupling agent (4) | 5.6 | - | 5.6 | - |
| Carbon black (5) | 5 | 5 | 5 | 5 |
| Short fibers (6) | - | - | 10 | 10 |
| Liquid plasticizer (7) | 20 | 20 | 20 | 20 |
| Liquid plasticizer (8) | 30 | 30 | 30 | 30 |
| Hydrocarbon resin (9) | 40 | 40 | 40 | 40 |
| DPG (10) | 2 | 2 | 2 | 2 |
| ZnO | 1.5 | 1.5 | 1.5 | 1.5 |
| Stearic acid | 3 | 3 | 3 | 3 |
| Antiozone wax | 1 | 1 | 1 | 1 |
| Antioxidant (11) | 3 | 3 | 3 | 3 |
| Sulphur | 1.4 | 1.4 | 1.4 | 1.4 |
| Accelerator (12) | 1.6 | 1.6 | 1.6 | 1.6 |

| | | | | |
|---|---|---|---|---|
| (1) BR with 0.3% of 1,2-units, 2.7% of trans-1,4-units and 97% of cis-1,4-units (Tg = - 104°C); (2) SBR with 27% of styrene units and 63% of butadiene units; with, for butadiene parts, 24% of 1,2-units, 50% of trans-1,4-untits (Tg= - 50°C); (3) Silica "Zeosil1165MP" from Rhodia, " (CTAB, BET: about 160 m²/g); (4) Coupling agent TESPT ("Si69" from Evonik); (5) Grade ASTM N234 (Cabot); (6) Short fiber of PVA ("Kuralon 1239" from Kuraray Co., Ltd.,; average length: about 10mm, thickness: 1330 dtex) (7) MES oil ("Catenex SNR" from Shell) (8) Oleic sunflower oil ("Agripure 80" from Cargiil, Weight percent oleic acid: 100%); (9) Hydrocarbon resin C5/C9 type ("Escorez ECR-373" from Exxon); (10) Diphenylguanidine ("Perkacit DPG" from Flexsys); (11) N-(1,3-dimethylbutyl)-N-phenyl-para-phenylenediamine ("Santoflex 6-PPD" from Flexsys); (12) N-dicyclohexyl-2-benzothiazolesulphenamide ("Santocure CBS" from Flexsys). | | | | |

**Table 2**

| Rubber Composition No.: | Ref. | Comparative examples | | Examples of the invention |
|---|---|---|---|---|
| | C-1 | C-2 | C-3 | C-4 |
| Snow grip index | 100 | 102 | 96 | 120 |

## Claims

1. A tire having a tread comprising a rubber composition comprising at least:
- a diene elastomer;
- between 0 and 30 phr of a reinforcing filler;
- between 30 and 180 phr of a plasticizer chosen from the group consisting of liquid plasticizers, hydrocarbon resins and the mixtures thereof; and
- between 2 and 50 phr of short fibers.
wherein the fibers are chosen from the group consisting of polyvinyl alcohol (PVA) fibers, polyethylene oxide (PEO) fibers, cellulose fibers, polysaccharide fibers and mixture thereof, preferably polyvinyl alcohol (PVA) fibers, and
wherein the average length of short fibers by number is between 1 and 30 mm.

2. The tire according to Claim 1, wherein the diene elastomer is chosen from the group consisting of natural rubber, synthetic polyisoprenes, polybutadienes, butadiene copolymers, isoprene copolymers and the mixtures thereof.

3. The tire according to Claim 1 or Claim 2, wherein the rubber composition comprises 20 to 100 phr of a copolymer based on styrene and butadiene, and optionally, 0 to 80 phr of another diene elastomer.

4. The tire according to Claim 3, wherein the copolymer based on styrene and butadiene is chosen from the group consisting of styrene-butadiene copolymers, styrene-butadiene-isoprene copolymers and the mixtures thereof.

5. The tire according to Claim 4, wherein the copolymer based on styrene and butadiene is a styrene-butadiene copolymer (SBR).

6. The tire according to any one of Claims 1 to 5, wherein the content of the plasticizer is between 40 and 160 phr.

7. The tire according to any one of Claims 1 to 6, wherein the liquid plasticizers are chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, sulphonate plasticizers and the mixtures thereof, preferably chosen from the group consisting of MES oils, TDAE oils, naphthenic oils, vegetable oils and mixtures thereof.

8. The tire according to any one of Claims 1 to 7, wherein the hydrocarbon resins exhibit a Tg greater than 20°C, wherein Tg is measured by DSC according to the standard ASTM D3418 (1999).

9. The tire according to any one of Claims 1 to 8, wherein the hydrocarbon resins are chosen from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins, and the mixtures of these resins.

10. The tire according to any one of Claims 1 to 9, wherein the reinforcing filler comprises carbon black and/or reinforcing inorganic filler(s).

11. The tire according to any one of Claims 1 to 10, wherein the content of short fibers is between 4 and 40 phr.

12. The tire according to any one of Claims 1 to 11, wherein the majority in number of the short fibers are oriented by an angle substantially of +45° or -45° with the radial direction and the circumferential one of the tire.

## Patentansprüche

1. Luftreifen, der eine Lauffläche aufweist, die eine Kautschukzusammensetzung umfasst, mindestens Folgendes umfassend:
- ein Dienelastomer;
- zwischen 0 und 30 phr eines Verstärkungsfüllstoffs ;
- zwischen 30 und 180 phr eines Weichmachers, der aus der Gruppe ausgewählt wird, die aus flüssigen Weichmachern, Kohlenwasserstoffharzen und Gemischen daraus besteht; und
- zwischen 2 und 50 phr an kurzen Fasern,
wobei die Fasern aus der Gruppe ausgewählt werden, die aus Polyvinylalkohol- (PVA)-Fasern, Polyethylenoxid-(PEO)-Fasern, Zellulosefasern, Polysaccharidfasern und Gemischen daraus, vorzugsweise aus Polyvinylalkohol-(PVA)-Fasern besteht, und
wobei die durchschnittliche Länge von kurzen Fasern zwischen 1 und 30 mm an der Zahl ist.

2. Luftreifen nach Anspruch 1, wobei das Dienelastomer aus der Gruppe ausgewählt wird, die aus Naturkautschuk, synthetischen Polyisoprenen, Polybutadienen, Butadiencopolymeren, Isoprencopolymeren und Gemischen daraus besteht.

3. Luftreifen nach Anspruch 1 oder Anspruch 2, wobei die Kautschukzusammensetzung 20 bis 100 phr eines Copolymers basierend auf Styrol und Butadien, und optional 0 bis 80 phr eines anderen Dienelastomers umfasst.

4. Luftreifen nach Anspruch 3, wobei das auf Styrol und Butadien basierende Copolymer aus der Gruppe ausgewählt wird, die aus Styrol-Butadien-Copolymeren, Styrol-Butadien-Isopren-Copolymeren und Gemischen daraus besteht.

5. Luftreifen nach Anspruch 4, wobei das auf Styrol und Butadien basierende Copolymer ein Styrol-Butadien-Copolymer (SBR) ist.

6. Luftreifen nach einem der Ansprüche 1 bis 5, wobei der Gehalt des Weichmachers zwischen 40 und 160 phr liegt.

7. Luftreifen nach einem der Ansprüche 1 bis 6, wobei die flüssigen Weichmacher aus der Gruppe ausgewählt werden, die aus Polyolefinölen, Naphtenölen, Paraffinölen, aromatischen Extraktölen (DAE), milden Extraktionslösungsmittelölen (MES), behandeltem, destilliertem Aromenextrakt (TDAE), Ölen aus kennzeichnungsfreiem Spezialraffinat (RAE), Ölen aus behandeltem kennzeichnungsfreiem Spezialraffinat (TRAE), Ölen aus kennzeichnungsfreiem Sicherheitsspezialraffinat (SRAE), Mineralölen, Pflanzenölen, Etherweichmachern, Esterweichmachern, Sulfonatweichmachern und Gemischen daraus besteht, vorzugsweise aus der Gruppe ausgewählt wird, die aus MES-Ölen, TDAE-Ölen, Naphtenölen, Pflanzenölen und Gemischen daraus besteht.

8. Luftreifen nach einem der Ansprüche 1 bis 7, wobei die Kohlenwasserstoffharze einen Tg-Wert größer als 20 °C aufweisen, wobei der Tg-Wert durch DSC gemäß dem Standard ASTM D3418 (1999) gemessen wird.

9. Luftreifen nach einem der Ansprüche 1 bis 8, wobei die Kohlenwasserstoffharze aus der Gruppe ausgewählt werden, die aus Cyclopentadien-Homopolymer- oder Copolymerharzen, Dicyclopentadien-Homopolymer- oder Copolymerharzen, Terpen-Homopolymer- oder Copolymerharzen, C₅-Fraktion-Homopolymer- oder Copolymerharzen, Cg-Fraktion-Homopolymer- oder Copolymerharzen, Alphamethylstyrol-Homopolymer- oder Copolymerharzen und Gemischen aus diesen Harzen besteht.

10. Luftreifen nach einem der Ansprüche 1 bis 9, wobei der Verstärkungsfüllstoff Ruß und/oder anorganische(n) Füllstoff(e) umfasst.

11. Luftreifen nach einem der Ansprüche 1 bis 10, wobei der Gehalt an kurzen Fasern zwischen 4 und 40 phr liegt.

12. Luftreifen nach einem der Ansprüche 1 bis 11, wobei die zahlenmäßige Mehrheit der kurzen Fasern um einen Winkel von im Wesentlichen +45° oder -45° in der radialen und der umfänglichen Richtung des Reifens ausgerichtet sind.

## Revendications

1. Pneumatique ayant une bande de roulement comprenant une composition de caoutchouc comprenant au moins :
- un élastomère de diène,
- entre 0 et 30 pce d'une charge de renforcement ;
- entre 30 et 180 pce d'un agent plastifiant choisi dans le groupe constitué des agents plastifiants liquides, des résines d'hydrocarbure et des mélanges de ceux-ci ; et
- entre 2 et 50 pce de fibres courtes,
dans lequel les fibres sont choisies dans le groupe constitué des fibres d'alcool polyvinylique (APV), des fibres d'oxyde de polyéthylène (PEOX), des fibres de cellulose, des fibres de polysaccharide et des mélanges de celles-ci, de préférence des fibres d'alcool polyvinylique (APV), et
dans lequel la longueur moyenne des fibres courtes en nombre se situe entre 1 et 30 mm.

2. Pneumatique selon la revendication 1, dans lequel l'élastomère de diène est choisi dans le groupe constitué du caoutchouc naturel, des polyisoprènes synthétiques, des polybutadiènes, des copolymères de butadiène, des copolymères d'isoprène et des mélanges de ceux-ci.

3. Pneumatique selon la revendication 1 ou la revendication 2, dans lequel la composition de caoutchouc comprend 20 à 100 pce d'un copolymère à base de styrène et de butadiène, et facultativement, 0 à 80 pce d'un autre élastomère de diène.

4. Pneumatique selon la revendication 3, dans lequel le copolymère à base de styrène et de butadiène est choisi dans le groupe constitué des copolymères de styrène-butadiène, des copolymères de styrène-butadiène-isoprène et des mélanges de ceux-ci.

5. Pneumatique selon la revendication 4, dans lequel le copolymère à base de styrène et de butadiène est le copolymère de styrène-butadiène (SBR).

6. Pneumatique selon l'une quelconque des revendications 1 à 5, dans lequel la teneur de l'agent plastifiant se situe entre 40 et 160 pce.

7. Pneumatique selon l'une quelconque des revendications 1 à 6, dans lequel les agents plastifiants liquides sont choisis dans le groupe constitué des huiles polyoléfiniques, des huiles naphténiques, des huiles paraffiniques, des huiles d'extraits aromatiques de distillat (DAE), des huiles de solvats d'extraction moyenne (MES), des huiles d'extraits aromatiques de distillats traités (TDAE), des huiles d'extraits aromatiques résiduels (RAE), des huiles d'extraits aromatiques résiduels traités (TRAE), des huiles d'extraits aromatiques résiduels de sécurité (SRAE), des huiles minérales, des huiles végétales, des agents plastifiants d'éther, des agents plastifiants d'ester, des agents plastifiants de sulfonate et des mélanges de ceux-ci, de préférence choisis dans le groupe constitué des huiles MES, des huiles TDAE, des huiles naphténiques, des huiles végétales et des mélanges de celles-ci.

8. Pneumatique selon l'une quelconque des revendications 1 à 7, dans lequel les résines d'hydrocarbure démontrent une Tg supérieure à 20 °C, dans lequel la Tg est mesurée par DSC selon la norme ASTM D3418 (1999).

9. Pneumatique selon l'une quelconque des revendications 1 à 8, dans lequel les résines d'hydrocarbure sont choisies dans le groupe constitué des résines d'homopolymère ou de copolymère de cyclopentadiène, des résines d'homopolymère ou de copolymère de dicyclopentadiène, des résines d'homopolymère ou de copolymère de terpène, des résines d'homopolymère ou de copolymère de fraction C₅, des résines d'homopolymère ou de copolymère de fraction C₉, des résines d'homopolymère ou de copolymère d'alpha-méthyle styrène, et des mélanges de ces résines.

10. Pneumatique selon l'une quelconque des revendications 1 à 9, dans lequel la charge de renforcement comprend du noir de carbone et/ou une ou plusieurs charges inorganiques de renforcement.

11. Pneumatique selon l'une quelconque des revendications 1 à 10, dans lequel la teneur en fibres courtes se situe entre 4 et 40 pce.

12. Pneumatique selon l'une quelconque des revendications 1 à 11, dans lequel la majorité en nombre des fibres courtes sont orientées à un angle de sensiblement +45° ou -45° par rapport au sens radial et au sens circonférentiel du pneumatique.
